Europäisches Patentamt

European Patent Office

Office européen des brevets

(11) Publication number: **0 365 341**
**A2**

## (12) EUROPEAN PATENT APPLICATION

(21) Application number: **89310794.6**

(22) Date of filing: **20.10.89**

(51) Int. Cl.5: **G05D 13/40 , F15B 11/04 , B65G 43/06**

(30) Priority: **20.10.88 GB 8824539**

(43) Date of publication of application:
**25.04.90 Bulletin 90/17**

(84) Designated Contracting States:
**AT DE GB**

(71) Applicant: **DOSCO OVERSEAS ENGINEERING LIMITED**
**British Fields Ollerton Road**
**Tuxford, Newark Nottinghamshire, NG22 0PQ(GB)**

(72) Inventor: **Dykes, Keith A.**
**7 Chartwell Road**
**Kirkby-in-Ashfield Nottinghamshire(GB)**

(74) Representative: **Carpmael, John William Maurice et al**
**CARPMAELS & RANSFORD 43 Bloomsbury Square**
**London, WC1A 2RA(GB)**

(54) **Automatic speed control.**

(57) An automatic speed control system especially for controlling the speed, and hence the noise of a conveyor in a mine, comprising a power source such as a hydraulic pump (3) which draws fluid from a reservoir (5) and drives a hydraulic motor (13) through a control device (11) wherein, when the motor (13) is running at low load, fluid flow to the motor is automatically split so that part of the fluid flow is to the control device (11) and hence to the motor (13) and part of the fluid flow is to the reservoir (5), there being a motor load sensing device (23) which senses the load or running pressure on the motor (13) so that when this is above a preset minimum value, the load sensing device (23) will automatically move to an open position to divert all the flow of fluid from the pump to said control device (11), and hence to the motor (13).

Fig. 2

## AUTOMATIC SPEED CONTROL

This invention relates to an automatic speed control system, and especially to such a system for use in the mining industry for controlling the speed of conveyors.

In the mining industry, there is an increasing pressure on manufacturers of mining machinery to reduce noise levels of their products, and this has produced a variety of designs to eliminate or reduce this problem.

It is of course well known that mining machinery, and especially conveyors for mined materials, are left running continuously for long periods in any one shift and this results in considerable noise being generated, especially when the equipment is running in an "unloaded" state. Chain conveyors in particular are usually much more noisy when running empty, or nearly empty.

Also, during the operational use of roadheaders and other coal cutting machines, it is often the practice of operators to leave the conveyor and gathering arms running while cutting. This invariably leads to the conveyor running empty for a considerable amount of its life. This is obviously a waste of energy. Also, it means the conveyor and its drive are subject to wear, even though they are performing no productive function.

The present invention seeks to overcome the above problems, but can be used for many other purposes. Basically, the solution is not to stop the apparatus altogether, but automatically to slow it down.

According to the present invention, we provide an automatic speed control system for mining or other machinery, the system including a power source, a variable speed motor for driving the machinery, a control device for the motor, and a load sensing device to sense the load on the motor, said load sensing device including means automatically to reduce the power to the motor when the load on the motor falls below a preset minimum value.

While it is envisaged that the system could be for an electrical motor, it has been particularly designed for use in a hydraulic circuit.

Preferably, therefore, the motor is a hydraulic motor and is located in a hydraulic circuit comprising a pump which draws hydraulic fluid from a reservoir, a relief valve, a filter, and a hydraulic control valve, and the load sensing device is a load sensing control valve.

Preferably, the hydraulic load sensing control valve divides the hydraulic fluid into two separate flow paths, one of which leads directly to the control valve and motor, and the other to the reservoir via a pressure relief valve which can be set to a pressure slightly above that of "no load" running pressure of the motor, so that when said running pressure is exceeded, the relief valve opens, diverting all the fluid in the other flow path to said one flow path and hence to said motor.

Preferably, the fluid is divided into the two flow paths by a by-pass flow regulator.

The invention, as applied to a hydraulic circuit for a conveyor of a mining machine, is now described by way of example with reference to the accompanying schematic drawings, in which:-

FIGURE 1 shows a standard control circuit, and

·FIGURE 2 shows the circuit of the invention.

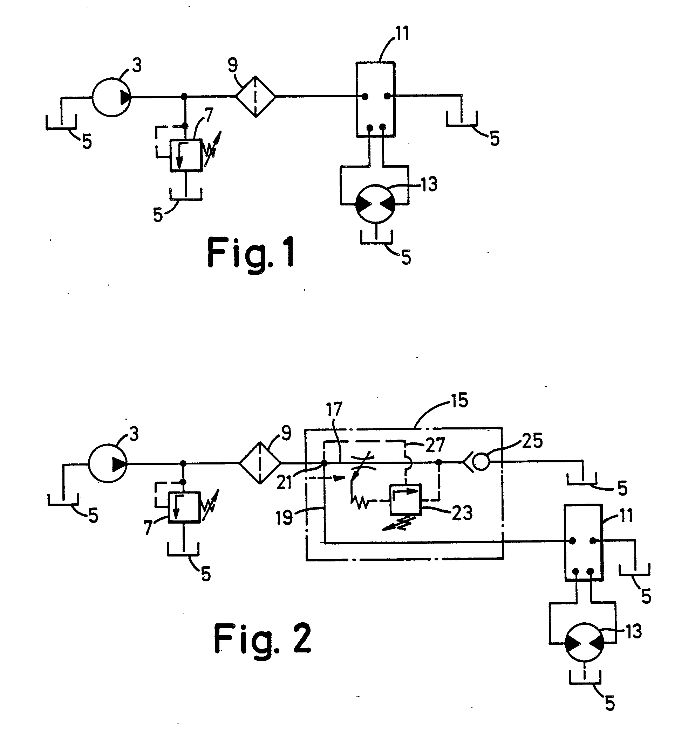

Referring to the drawings, Figure 1 shows a hydraulic pump 3 which draws fluid from a hydraulic reservoir 5 and pumps the fluid through the circuit. The pump 3 is capable of raising the pressure of the fluid to 2,500 p.s.i. depending on the resistance placed in its path.

To protect the pump 3 from failure of a hydraulic component, thus giving a "dead end" effect, the circuit is fitted with a primary relief valve 7 set at 2,400 p.s.i. situated immediately after the pump 3.

After the relief valve is a filter 9 which removes any contaminant from the hydraulic fluid. Downstream of the filter 9 is a control valve 11. The function of the control valve 11 allows the fluid to pass through when the service is not required or, by operating a handle, will divert the fluid to make the hydraulic motor(s) 13 turn in a clockwise or anticlockwise direction depending on whether the handle is pushed forward to pulled back. The motors 13 in this case are used to drive a conveyor on a roadheader and a pair of gathering arms. The return fluid is then allowed to flow back to the fluid reservoir 5. This is a known control circuit.

The circuit of the present invention is shown in Figure 2 and like parts are indentified by the same reference numerals as in Figure 1.

The circuit up to and including the filter 9 is the same as the standard known circuit. However, after the filter, fluid passes into a "load sensing flow control valve 15 which divides the incoming fluid into two separate flow paths 17 and 19. This is achieved by using a "by-pass flow regulator" cartridge 21. The two flow paths 17 and 19 are adjustable to suit different applications, but basically are set to give either the desired slow speed or full speed.

Whether or not the loading system driven by the motors 13 turns at slow speed or full speed depends on the setting of a pressure relief valve 23 situated inside the "load sensing flow control valve" 5. This valve 23 is set at a pressure of approximately 200 p.s.i. above the "no load" running pressure of the conveyor (and gathering arms). When the conveyor is running at "no load" and this relief valve 23 is closed, the fluid is divided by the cartridge 21 into the two flow paths 17 and 19, the flow 19 going to the control valve 11 giving a slow speed, and the second flow 17 going back to the reservoir 5 (via a check valve 25 to produce a little back pressure).

However, when coal or debris is loaded onto the conveyor, the running pressure of the motors increases, and quite quickly the relief valve 23 inside the "load sensing flow control valve" 15 opens. When this happens, all the incoming fluid is directed through a line 27 and into the by-pass flow path 19 to the control valve 11, thus increasing the speed of the motors 13 and hence the conveyor from slow to full speed.

When the conveyor is empty again, the running pressure on the motors 13 is reduced to the "no load" running pressure, and the relief valve 23 inside the "load sensing flow control valve" 15 closes. This then allows the hydraulic fluid once again to be split into two flow paths 17 and 19, thus reducing the speed of the conveyor to a slow speed.

As in the standard known circuit, all fluid from the control valve 11 returns back to the fluid reservoir 5.

Although the circuit of Figure 2 has been specifically designed to control automatically the speed of a conveyor on a mining machine, it could obviously be used for other purposes.

It will of course be understood that the present invention has been described above purely by way of example, and modifications of detail can be made within the scope of the invention.

## Claims

1. An automatic speed control system for mining or other machinery, the system including a power source (3), a variable speed motor (13) for driving the machinery, a control device for the motor (11), and a load sensing device (15) to sense the load on the motor (13), said load sensing device (15) including means (23, 27, 17, 19) automatically to reduce the power to the motor (13) when the load on the motor falls below a preset minimum value.

2. A speed control system according to claim 1 wherein the motor is a hydraulic motor (13) and is located in a hydraulic circuit comprising a relief valve (7), a filter (9), and a hydraulic control valve (11), and wherein the load sensing device is a load sensing control valve (15).

3. A speed control system according to claim 2 wherein the hydraulic load sensing control valve (15) divides the hydraulic fluid into two separate flow paths (17,19), one (19) of which leads directly to the control valve (11) and motor (13), and the other (17) to the reservoir (5) via a pressure relief valve (23) which can be set to a pressure slightly above that of "no load" running pressure of the motor (13), so that when said running pressure is exceeded, the relief valve (23) opens, diverting all the fluid in the other flow path (17) to said one flow path (19) and hence to said motor (13).

4. A speed control system according to claim 3 wherein the fluid is divided into the two flow paths (17,19) by a by-pass flow regulator (21).

5. An automatic speed control system controlling the speed of a machine driven by a hydraulic motor (13) through a control device (11) comprising fluid flow control means (21,23) which, when the motor (13) is running at low load, causes fluid flow to the motor automatically to be split so that part of the fluid flow is to the control device (11) and hence to the motor (13) and part of the fluid flow is to a reservoir (5), the flow control means (21,23) including a motor load sensing device (23) which senses the load or running pressure on the motor (13) so that when this is above a preset minimum value, the load sensing device (23) will automatically move to an open position to divert all the flow of fluid to said control device (11), and hence to the motor (13).

6. An automatic speed control system as claimed in any one of the preceding claims wherein a pressure relief valve (23) is arranged to open at a predetermined running pressure of the motor (13), opening of the valve (23) causing all the flow of fluid from the power source (3) to be directed to the motor (11).

Fig.1

Fig. 2